# EUROPÄISCHE PATENTSCHRIFT

(11) **EP 4 031 882 B1**
(45) Veröffentlichungstag und Bekanntmachung des Hinweises auf die Patenterteilung: **08.11.2023**
(21) Anmeldenummer: 20771227.4
(22) Anmeldetag: 03.09.2020
(51) Int. Cl.: G01D 11/30, G01P 3/487, G01P 1/00, G01P 1/02

(54) **SYSTEM AUS EINEM SENSOR UND EINER BEFESTIGUNGSEINRICHTUNG**
SYSTEM COMPRISING A SENSOR AND A FASTENING APPARATUS
SYSTÈME COMPRENANT UN CAPTEUR ET UN APPAREIL DE FIXATION

(30) Priorität: 20.09.2019 DE 102019125405
(43) Veröffentlichungstag der Anmeldung: 27.07.2022
(73) Patentinhaber: KNORR-BREMSE Systeme für Nutzfahrzeuge GmbH, 80809 München (DE)
(72) Erfinder: HAUFF, Michael, 81379 München (DE); ROHSE, Tobias, 71701 Schwieberdingen (DE); SCHMID, Karl-Heinz, 74354 Besigheim (DE); WIEDER, Gerhard, 74354 Besigheim (DE)
(86) Internationale Anmeldenummer: PCT/EP2020/074537
(87) Internationale Veröffentlichungsnummer: WO 2021/052762

(56) Entgegenhaltungen:
- EP-A2- 1 284 424
- DE-A1-102010 049 552
- DE-A1-102017 113 604
- DE-U1- 8 815 130
- US-B1- 6 254 276

## Beschreibung

Die Erfindung betrifft einen Sensor und ein System aus dem Sensor und einer Befestigungseinrichtung, insbesondere betrifft sie einen Sensor zum Erfassen einer physikalischen Größe in Abhängigkeit von einer Ausrichtung des Sensors und ein System aus dem Sensor und einer Befestigungseinrichtung.

Bislang wurden, insbesondere auf dem Gebiet einer Drehzahlerfassung in Fahrzeugen, in erster Linie passive Sensoren verwendet, um eine Funktion von Assistenzsystemen, wie beispielsweise ABS, ASR oder ESP, zu ermöglichen.

Neuerdings werden vermehrt aktive Sensoren verwendet, also Sensoren, die durch Anlegen einer Versorgungsspannung aktiviert werden und ein Ausgangssignal erzeugen. Somit wird beispielsweise bereits im Sensor ein Datenprotokoll erzeugt, das, über ein Bus-System übertragen, in einem Steuergerät ausgewertet werden kann. Außerdem besteht die Möglichkeit, Diagnosefunktionen zu implementieren.

Insbesondere auf dem Gebiet der Raddrehzahlerfassung werden Sensoren mit mindestens zwei Messelementen eingesetzt, um eine Bewegungsrichtung des Rades zu erfassen. Daher ist es bei der Verwendung von diesen Sensoren notwendig, die Raddrehzahlsensoren in einer vorbestimmten Orientierung in das Fahrzeug zu montieren, so dass die Messelemente der Sensoren zu einer Bewegung von Polrädern ausgerichtet sind. Diese Ausrichtung darf sich auch während eines Betriebs nicht verändern.

Dokument DE 10 2010 049 552 A1 offenbart einen Wälzlagersensor mit einem verdrehgesicherten Signalaufnehmer, wobei der Wälzlagersensor eine im Wesentlichen kreisrunde zylindrische Form mit einer Nut als Formmerkmal aufweist. Ein Aufnahmekörper des Wälzlagersensors weist ein Sicherungsteil als Formmerkmal auf.

In Dokument US 6,254,276 B1 ist ein Wälzlager mit einem Drehzahlsensor offenbart, der an seinem kreisrunden Gehäuse einen Vorsprung aufweist, der in eine Vertiefung in der Sensoraufnahme eingreift.

DE 10 2017 113604 A1 offenbart einen Drehimpulsgeber, der Vertiefungen und Erhöhungen als Formmerkmal aufweist, die mit Klemm- und Positionierelementen einer Klemmhülse zusammenwirken.

Dokument EP 1 284 424 A2 zeigt einen Sensorbefestigungsaufbau, bei dem ein Sensor mit einer vorstehenden Rippe in Nuten in einer Klemmhülse eingreift, die über ein weiteres mit der Rippe nicht direkt zusammenwirkendes Formmerkmal über ein Formmerkmal in einem Gehäuse orientiert ist.

In DE 88 15 130 U1 ist ein Sensor über eine Klemmhülse in einer Bohrung eines Gehäuses geklemmt.

Der Erfindung liegt also die Aufgabe zugrunde, die obigen Probleme zu lösen und einen Sensor und ein System aus einem Sensor und einer Befestigungseinrichtung bereitzustellen, mit denen der Sensor einfach und dauerhaft ausgerichtet werden kann.

Die Aufgabe wird durch ein System gemäß Anspruch 1 gelöst. Vorteilhafte Weiterentwicklungen sind in den abhängigen Ansprüchen enthalten.

Erfindungsgemäß weist ein Sensorkörper eines Sensors zum Erfassen einer physikalischen Größe in Abhängigkeit von einer Ausrichtung des Sensors um eine Achse ein vorbestimmtes erstes Formmerkmal an einer Außenfläche auf, das dazu ausgebildet ist, eine vorbestimmte Ausrichtung des Sensors um die Achse zu ermöglichen.

Durch dieses Formmerkmal ist grundsätzlich die Möglichkeit gegeben, eine formschlüssige Verbindung mit einer Befestigungseinrichtung herzustellen, so dass eine vorbestimmte Ausrichtung des Sensors einfach und dauerhaft möglich ist.

In einer vorteilhaften Weiterentwicklung des Sensors ist die physikalische Größe ein durch eine Bewegung eines Objekts in der Nähe des Sensors hervorgerufener magnetischer Impuls, und der Sensor ist als ein aktiver Drehzahlsensor, der eine Richtung der Bewegung des Objekts magnetisch erfasst, ausgebildet.

Eine Anwendung solcher aktiver Sensoren im Bereich der Drehzahlerfassung von Rädern von Fahrzeugen ermöglicht es, eine Signalübertragung zu vereinfachen und beispielsweise Diagnosefunktionen zu implementieren. Ferner kann durch das Vorsehen des aktiven Drehzahlsensors eine langsame Bewegung aus dem Stillstand überhaupt oder genauer erfasst werden. Vorzugsweise wird die Richtung der Bewegung durch ein Vorsehen von mehreren Messelementen für den magnetischen Impuls in dem Sensor erfasst. Durch den Sensor können also sowohl eine Bewegung als auch eine Richtung der Bewegung beispielsweise eines Polrads als das Objekt erfasst werden.

Bei einer weiteren vorteilhaften Weiterentwicklung des Sensors weist das erste Formmerkmal eine Vertiefung an der Außenfläche des Sensorkörpers auf.

Eine Vertiefung in dem Sensorkörper ist einfach herzustellen und bietet bei einem Vorsehen eines zu der Vertiefung komplementären Gegenstücks, nämlich eine Erhöhung an der Befestigungseinrichtung, einfach die Möglichkeit, das Ausrichten des Sensors zu ermöglichen.

In einer anderen vorteilhaften Weiterentwicklung des Sensors weist das erste Formmerkmal eine Erhöhung an der Außenfläche des Sensorkörpers auf.

Auch eine Erhöhung an dem Sensorkörper, optional kombiniert mit einer Vertiefung, ist einfach herzustellen und bietet bei einem Vorsehen eines zu der Erhöhung, und gegebenenfalls zu der Vertiefung, komplementären Gegenstücks einfach die Möglichkeit, das Ausrichten des Sensors zu ermöglichen.

Erfindungsgemäß weist der Sensorkörper eine im Wesentlichen kreisrunde zylindrische Form auf, die Ausrichtung des Sensors ist eine vorbestimmte Orientierung um eine Längsachse der im Wesentlichen kreisrunden zylindrischen Form, und die Erhöhung ist an einer vorbestimmten Stelle am Umfang des Sensorgehäuses angeordnet.

Durch diese Bauform des Sensors, die prinzipiell bisherigen Bauformen entspricht, kann der Sensor ohne umfangreiche Umkonstruktionen am bisherigen Einbauort eingebaut werden.

In einer weiteren vorteilhaften Weiterentwicklung des Sensors hat die Erhöhung in axialer Richtung einen Abstand von einem angrenzenden Ende des Sensorkörpers.

Durch dieses Merkmal wird eine Montage des Sensors vereinfacht, da der Sensor zunächst, ohne auf die Orientierung des Sensors zu achten, einfach in eine Öffnung einer Befestigungseinrichtung steckbar ist. Anschließend ist der Sensor mit einer leichten Drehkraft verdrehbar, um die vorbestimmte Orientierung zu erzielen und einen Formschluss mit der Erhöhung zu ermöglichen.

Bei einer vorteilhaften Weiterentwicklung des Sensors bildet die Erhöhung eine parallel zu der Längsachse verlaufende Rippe.

Ein Vorsehen der Rippe parallel zu der Längsachse ist fertigungstechnisch einfach umsetzbar und die Orientierung des Sensors kann sicher dauerhaft beibehalten werden.

Erfindungsgemäß wird ein System aus dem Sensor und einer Befestigungseinrichtung für den Sensor bereitgestellt, wobei die Befestigungseinrichtung einen Aufnahmekörper mit einer Aufnahmeeinrichtung, die ausgebildet ist, den Sensorkörper aufzunehmen, und ein zu dem ersten Formmerkmal komplementäres zweites Formmerkmal an dem Aufnahmekörper aufweist.

Durch dieses System ist die Möglichkeit gegeben, die formschlüssige Verbindung zwischen dem Sensor und der Befestigungseinrichtung herzustellen, so dass eine bestimmte Ausrichtung des Sensors einfach und dauerhaft möglich ist.

Erfindungsgemäß weist die Aufnahmeeinrichtung eine langgestreckte Öffnung mit einem im Wesentlichen kreisrunden Querschnitt auf, und das zweite Formmerkmal weist eine Nut entlang einer Längsrichtung der Öffnung auf.

In einer solchen Aufnahmeeinrichtung ist es möglich, den Sensor mit dem Sensorkörper, der eine im Wesentlichen kreisrunde zylindrische Form aufweist, und der Erhöhung, die an einer vorbestimmten Stelle am Umfang des Sensorgehäuses angeordnet ist, einfach und sicher auszurichten.

Erfindungsgemäß ist zusätzlich ein Befestigungsmittel mit einem zu dem ersten Formmerkmal und dem zweiten Formmerkmal komplementären dritten Formmerkmal vorgesehen.

Durch das Vorsehen eines solchen Befestigungsmittels kann der Sensor unter Beibehaltung der Orientierung sicher befestigt werden.

Erfindungsgemäß weist das Befestigungsmittel eine Klemmhülse auf, die dazu ausgebildet ist, in der Öffnung aufgenommen zu werden und darin radial zwischen der Öffnung und dem Sensorkörper geklemmt zu werden, wobei die Klemmhülse an ihrem Umfang mit dem dritten Formmerkmal versehen ist.

Durch das Vorsehen dieser Klemmhülse kann der Sensor bei einem Einführen in die Öffnung gleichzeitig sicher in der vorbestimmten Orientierung befestigt werden, so dass der Montagevorgang vereinfacht wird, und es dennoch möglich ist, den Sensor bei Bedarf noch axial zu verschieben.

Erfindungsgemäß ist das dritte Formmerkmal als axialer Schlitz an dem Umfang der Klemmhülse ausgebildet, wobei die Schlitzlängsseiten zwei beanstandete Endabschnitte am Umfang der Klemmhülse bilden.

Eine solche Klemmhülse ist unempfindlich gegenüber Toleranzen der Öffnung und des Sensors und kann einfach hergestellt werden.

Erfindungsgemäß sind die zwei Endabschnitte radial nach außen gebogen, die Nut und die Klemmhülse sind dazu ausgebildet, dass die zwei Endabschnitte in die Nut ragen und die Erhöhung des Sensors ist zwischen den zwei radial nach außen in die Nut ragenden Endabschnitten angeordnet.

Diese Anordnung erleichtert die Montage, da die Klemmhülse bereits vorab mit der richtigen Orientierung des dritten Formmerkmals montiert werden kann.

In einer vorteilhaften Weiterentwicklung des Systems weist das dritte Formmerkmal zusätzlich eine radial nach außen in die Nut der Öffnung ragende Erhöhung auf.

Durch eine solche Ausbildung der Klemmhülse vereinfacht sich deren Herstellung.

Nachstehend wird die Erfindung anhand von Ausführungsbeispielen unter Bezugnahme auf die beigefügten Zeichnungen erläutert.

### Insbesondere zeigt

- Fig. 1: eine seitliche Schnittansicht einer Einbausituation eines erfindungsgemäßen Systems mit einem Sensor, einer Befestigungseinrichtung und einem Befestigungsmittel;
- Fig. 2: eine Seitenansicht des Sensors mit einem ersten Formmerkmal;
- Fig. 3: eine Vorderansicht der Befestigungseinrichtung mit einem zweiten Formmerkmal;
- Fig. 4: eine Vorderansicht der Befestigungseinrichtung von Fig. 3 mit dem montierten Sensor;
- Fig. 5: einen Ausschnitt der Darstellung von Fig. 4 mit dem erfindungsgemäß montierten Sensor und zusätzlichem Befestigungsmittel;

- Fig. 6: einen Ausschnitt der Darstellung von Fig. 4 mit dem montierten Sensor und zusätzlich einem Befestigungsmittel in einem nicht zur Erfindung gehörendem Beispiel; und
- Fig. 7: eine Vorderansicht der Befestigungseinrichtung mit einem beispielhaften zweiten und dritten Formmerkmal.

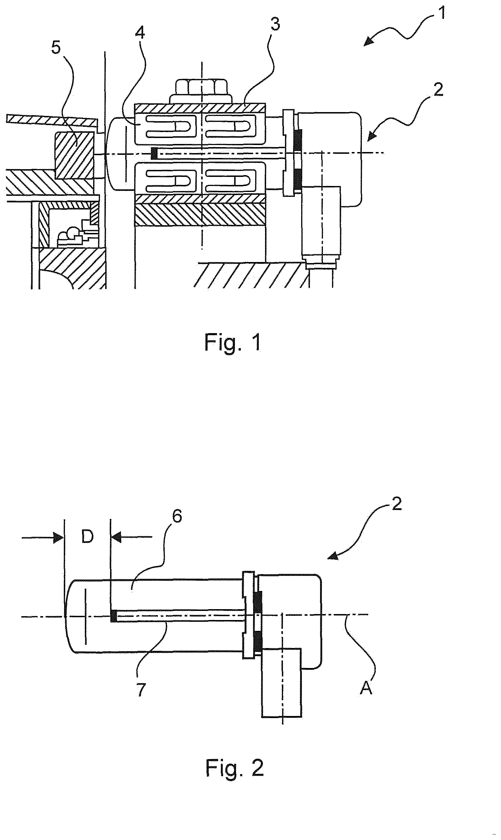

Fig. 1 zeigt eine seitliche Schnittansicht einer Einbausituation eines erfindungsgemäßen Systems 1, das einen Sensor 2, eine Befestigungseinrichtung 3 und ein Befestiunsmittel 4 aufweist. In einem nicht zur Erfindung gehörenden Beispiel ist das Befestigungsmittel 4 nicht vorgesehen, sondern die Befestigungseinrichtung ist so ausgebildet, dass kein separater Befestigungsmechanismus erforderlich ist.

Ferner zeigt Fig. 1 ein Polrad 5, das bei einer Drehung magnetische Impulse initiiert, die von dem Sensor 2 erfasst werden.

**Fig. 2** zeigt eine Seitenansicht des Sensors 2 mit einem ersten Formmerkmal 7. Der Sensor weist eine Achse A auf, wobei der Sensor 2 ein Sensor zum Erfassen einer physikalischen Größe in Abhängigkeit von einer Ausrichtung des Sensors 2 um die Achse A ist. Insbesondere erfasst der Sensor 2 eine Veränderung einer physikalischen Größe infolge einer Bewegung einer Materie bezüglich des Sensors 2, wobei die Bewegung nur in einer vorbestimmten Ausrichtung des Sensors 2 um die Achse A erfassbar ist. Die Materie ist in dieser Ausführungsform das Polrad 5 mit seinen Zähnen und der Sensor 2 erfasst die magnetischen Impulse des Polrads 5 nur, wenn seine Ausrichtung um die Achse A so gewählt ist, dass eine Erfassungsrichtung entsprechend einer tangentialen Richtung des Polrads 5 ist.

Der Sensor 2 ist als ein aktiver Drehzahlsensor ausgebildet, also als ein Sensor, der durch Anlegen einer Versorgungsspannung aktiviert wird und ein Ausgangssignal erzeugt.

Der Sensor 2 weist einen Sensorkörper 6 auf. An einer Außenfläche des Sensorkörpers 6 ist eine Rippe, also eine Erhöhung, als das erste Formmerkmal 7 vorgesehen. Die Erhöhung ist an einer vorbestimmten Stelle am Umfang des Sensorgehäuses 6 vorgesehen und somit ermöglicht das erste Formmerkmal 7 eine vorbestimmte Ausrichtung des Sensors 2 um seine Achse A.

In einer alternativen Ausführungsform ist keine Rippe als eine Erhöhung, sondern beispielsweise eine kegelförmige Erhöhung als das erste Formmerkmal 7 vorgesehen. Alternativ ist ebenfalls möglich, dass das erste Formmerkmal 7 eine Vertiefung, also beispielsweise eine Sicke entlang der Achse A oder eine tangentiale Abflachung ist.

Der Sensorkörper 6 weist eine im Wesentlichen kreisrunde zylindrische Form auf. Das Aufweisen der im Wesentlichen kreisrunden zylindrischen Form bedeutet, dass, abweichend von der vollständig kreisrunden zylindrischen Form, das erste Formmerkmal vorhanden ist und/oder sonstige Funktionsflächen, beispielsweise Schlüsselflächen, vorhanden sind. Die Achse A ist in dieser Ausführungsform eine Längsachse der im Wesentlichen kreisrunden zylindrischen Form des Sensorkörpers 6. Die Rippe ist parallel zu der Längsachse angeordnet.

Wie in Fig. 2 ebenfalls dargestellt ist, hat die Erhöhung in axialer Richtung einen Abstand D von einem angrenzenden Ende des Sensorkörpers 6. Der Abstand D beträgt in dieser Ausführungsform 8 mm, kann alternativ aber größer oder kleiner sein.

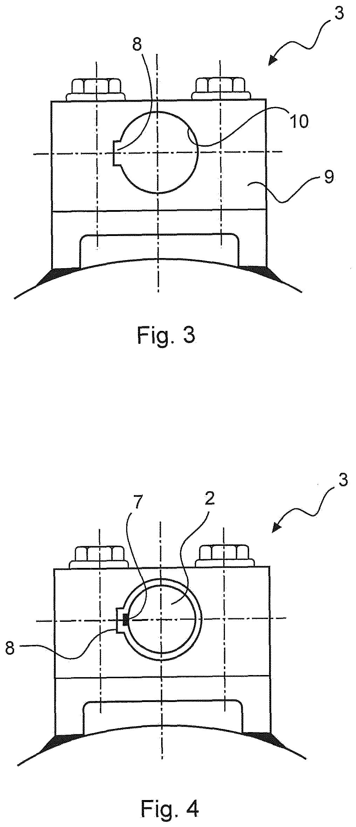

**Fig. 3** zeigt eine Vorderansicht der Befestigungseinrichtung 3 mit einem zweiten Formmerkmal 8. Die Befestigungseinrichtung 3 weist einen Aufnahmekörper 9 mit einer Aufnahmeeinrichtung 10 auf, die ausgebildet ist, den Sensorkörper 6 aufzunehmen. Die Aufnahmeeinrichtung 10 ist erfindungsgemäß als eine Bohrung, nämlich als langgestreckte Öffnung mit einem im Wesentlichen kreisrundem Querschnitt, in dem Aufnahmekörper 9 ausgeführt, kann aber alternativ auch beispielsweise ein Gewinde zum Anschrauben eines entsprechend gestalteten Sensors 2 sein.

Die Befestigungseinrichtung 3 weist an dem Aufnahmekörper 9 ferner eine Nut als das zweite Formmerkmal 8 entlang einer Längsrichtung in der Bohrung auf. Das zweite Formmerkmal 8 ist komplementär zu dem ersten Formmerkmal 7, was bedeutet, dass sich die Eigenschaften des ersten Formmerkmals 7 und des zweiten Formmerkmals 8 ergänzen und das erste Formmerkmal 7 und das zweite Formmerkmal 8 zueinander passen.

**Fig. 4** zeigt eine Vorderansicht der Befestigungseinrichtung 3 mit dem montierten Sensor 2 und den komplementären Formmerkmalen 7, 8.

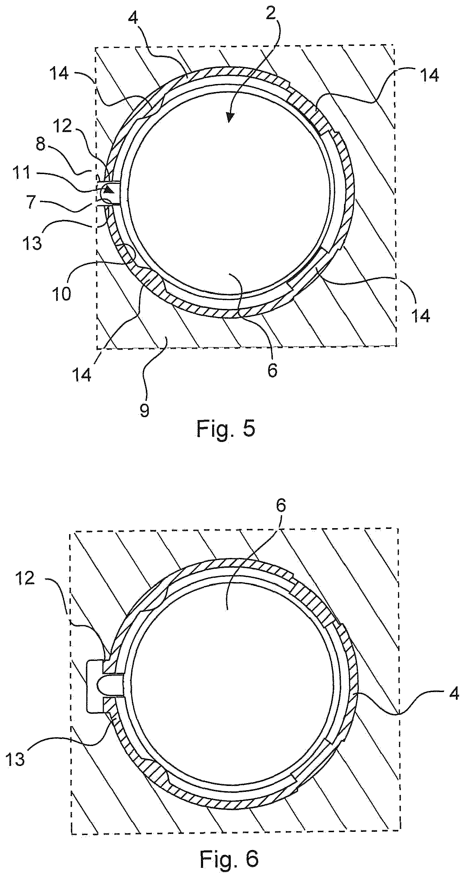

**Fig. 5** zeigt erfindungsgemäß einen Ausschnitt der Darstellung von Fig. 4 mit dem montierten Sensor 2 und zusätzlich einem Befestigungsmittel 4.

Das Befestigungsmittel 4 weist ein drittes Formmerkmal 11 auf, das zu dem ersten Formmerkmal 7 und dem zweiten Formmerkmal 8 komplementär ist, bzw. das so geformt ist, dass sich deren Formeigenschaften ergänzen.

Erfindungsgemäß weist das Befestigungsmittel 4 eine Klemmhülse auf. Die Klemmhülse ist dazu ausgebildet, in der Öffnung, also in der Aufnahmeeinrichtung 10, aufgenommen zu werden und darin radial zwischen der Öffnung und dem Sensorkörper 6 zu klemmen.

Die Klemmhülse ist an ihrem Umfang mit dem dritten Formmerkmal 11 versehen. Erfindungsgemäß weist das dritte Formmerkmal 11 einen axialen Spalt zwischen zwei Endabschnitten 12, 13 an dem Umfang der Klemmhülse auf. Dies bedeutet, dass ein durchgehender Schlitz in axialer Richtung an ihrem Umfang in der Klemmhülse vorgesehen ist. Durch den Schlitz, nämlich das dritte Formmerkmal 11, ragt die Rippe des Sensorkörpers 6 in die Nut, nämlich das zweite Formmerkmal 8, um die Ausrichtung des Sensors 2 und der Klemmhülse um die Achse A zu realisieren.

Die Klemmhülse ist ferner mit Federelementen 14 versehen, um eine sichere Klemmkraft aufzubringen. Die Federelemente 14 sind im Wesentlichen längliche rechteckige Zungen, die in der Längsrichtung an einem Ende integral an der Klemmhülse ausgebildet bzw. daran befestigt sind. Alternativ ist auch eine andere, beispielsweise quadratische Form möglich. Üblicherweise werden sie durch Freistanzen der Kontur der Zungen an drei Seiten gebildet und dann nach außen gebogen, so dass sie vorgespannt sind und nach außen vorstehen. Durch eine federnde Eigenschaft des Materials der Klemmhülse bringen die Federelemente 14 somit bei einem Einführen in die Öffnung des Aufnahmekörpers 9 eine radiale Klemmkraft auf.

**Fig. 6** zeigt einen Ausschnitt der Darstellung von Fig. 4 mit dem montierten Sensor 2 und zusätzlich dem Befestigungsmittel 4 in einem nicht zur Erfindung gehörenden Beispiel.

Das Befestigungsmittel 4 in Fig. 6 unterscheidet sich von dem Befestigungsmittel 4 in Fig. 5 darin, dass die Endabschnitte 12, 13 nicht am Umfang enden, um den axialen Freiraum zu bilden, sondern dass die Endabschnitte radial nach außen gebogen sind und in die Nut ragen und dazwischen der axiale Freiraum gebildet wird.

In diesem System 1 ist also die Erhöhung des Sensorkörpers 6 zwischen den zwei radial nach außen in die Nut ragenden Endabschnitten 12, 13 angeordnet.

In einem alternativen Beispiel des Befestigungsmittels 4 weist dieses sowohl nach außen in die Nut der Bohrung ragende Endabschnitte 12, 13 als auch axial an einer anderen Position radial nach innen gebogene Endabschnitte auf. Die nach innen gebogenen Endabschnitte ragen erfindungsgemäß in eine Nut die in in einer Längsrichtung in dem Sensorgehäuse 6 vorgesehen ist.

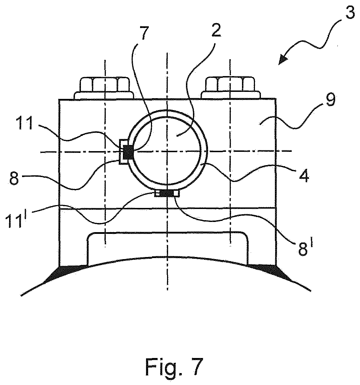

**Fig. 7** zeigt eine Vorderansicht der Befestigungseinrichtung 3 mit einem alternativen zweiten Formmerkmal 8, 8' und einem alternativen dritten Formmerkmal 11, 11'.

Das alternative dritte Formmerkmal 11, 11' des Befestigungsmittels 4 weist neben dem durchgehenden Schlitz (Fig. 5) zusätzlich eine Erhöhung als das dritte Formmerkmal 11' auf. Die Erhöhung ragt von der Klemmhülse, nämlich dem Befestigungsmittel 4, radial nach außen in eine weitere Nut, nämlich in das dritten Formmerkmal 8', um die Ausrichtung der Klemmhülse um die Achse A zu der Aufnahmeeinrichtung 9 zu realisieren. Der Sensor 2 ist durch die Rippe in dem Schlitz der Klemmhülse, nämlich in dem dritten Formmerkmal 11, um die Achse A zu der Klemmhülse ausgerichtet. In einer alternativen Ausführungsform ist die Nut in der Bohrung für die Rippe des Sensorkörpers 6 nicht vorgesehen, sondern die Rippe des Sensorkörpers 6 ragt lediglich in den Schlitz der Klemmhülse.

Alle in der Beschreibung, den nachfolgenden Ansprüchen und der Zeichnung dargestellten Merkmale können sowohl einzeln als auch in beliebiger Kombination miteinander erfindungswesentlich sein.

### BEZUGSZEICHENLISTE

- 1: System
- 2: Sensor
- 3: Befestigungseinrichtung
- 4: Befestigungsmittel
- 5: Polrad
- 6: Sensorkörper
- 7: erstes Formmerkmal
- 8: zweites Formmerkmal
- 9: Aufnahmekörper
- 10: Aufnahmeeinrichtung
- 11: drittes Formmerkmal
- 12: Ende am Umfang der Klemmhülse
- 13: Ende am Umfang der Klemmhülse
- 14: Federelement

- A: Achse

## Patentansprüche

1. System (1) aus einem Sensor (2) zum Erfassen einer physikalischen Größe in Abhängigkeit von einer Ausrichtung des Sensors (2) um eine Achse (A) des Sensors (2), wobei
der Sensor (2) einen Sensorkörper (6) mit einem vorbestimmten ersten Formmerkmal (7) an einer Außenfläche des Sensorkörpers (6) aufweist, das dazu ausgebildet ist, eine vorbestimmte Ausrichtung des Sensors (2) um die Achse (A) zu ermöglichen, und einer Befestigungseinrichtung (3) für den Sensor (2), wobei die Befestigungseinrichtung (3)
einen Aufnahmekörper (9) mit einer Aufnahmeeinrichtung (10), die ausgebildet ist, den Sensorkörper (6) aufzunehmen, und
ein zu dem ersten Formmerkmal (7) komplementäres zweites Formmerkmal (8) an dem Aufnahmekörper (9) aufweist,
wobei das erste Formmerkmal (7) eine Erhöhung an der Außenfläche des Sensorkörpers (6) aufweist, und
der Sensorkörper (6) eine im Wesentlichen kreisrunde zylindrische Form aufweist,
die Ausrichtung des Sensors (2) eine vorbestimmte Orientierung um eine Längsachse der im Wesentlichen kreisrunden zylindrischen Form ist, und
die Erhöhung an einer vorbestimmten Stelle am Umfang des Sensorgehäuses (6) angeordnet ist,
wobei
das System (1) ein Befestigungsmittel (4) mit einem zu dem ersten Formmerkmal (7) und dem zweiten Formmerkmal (8) komplementären dritten Formmerkmal (11) aufweist, wobei
die Aufnahmeeinrichtung (10) eine langgestreckte Öffnung mit einem im Wesentlichen kreisrunden Querschnitt aufweist,
das zweite Formmerkmal (8) eine Nut entlang einer Längsrichtung der Öffnung aufweist, und
das Befestigungsmittel (4) eine Klemmhülse aufweist, die dazu ausgebildet ist, in der Öffnung aufgenommen zu werden und darin radial zwischen der Öffnung und dem Sensorkörper (6) geklemmt zu werden, wobei die Klemmhülse an ihrem Umfang mit dem dritten Formmerkmal (11) versehen ist, und
das dritte Formmerkmal (11) als axialer Schlitz an dem Umfang der Klemmhülse ausgebildet ist, wobei die Schlitzlängsseiten zwei beanstandete Endabschnitte (12, 13) bilden, und
die zwei Endabschnitte (12, 13) radial nach außen gebogen sind und die Nut und die Klemmhülse dazu ausgebildet sind, dass die zwei Endabschnitte (12, 13) in die Nut ragen, und
die Erhöhung des Sensorkörpers (6) des Sensors (2) zwischen den zwei radial nach außen in die Nut ragenden Endabschnitte (12, 13) angeordnet ist.

2. System (1) gemäß Anspruch 1, wobei
die physikalische Größe ein magnetischer Impuls ist, und
der Sensor (2) als ein aktiver Drehzahlsensor, der den magnetischen Impuls erfasst, ausgebildet ist.

3. System (1) gemäß Anspruch 1 oder 2, wobei
das erste Formmerkmal (7) eine Vertiefung an der Außenfläche des Sensorkörpers (6) aufweist.

4. System (1) gemäß einem der vorangehenden Ansprüche, wobei
die Erhöhung in axialer Richtung einen Abstand (D) von einem angrenzenden Ende des Sensorkörpers (6) hat.

5. System (1) einem der vorangehenden Ansprüche, wobei
die Erhöhung eine parallel zu der Längsachse verlaufende Rippe bildet.

6. System (1) gemäß einem der vorangehenden Ansprüche , wobei
das dritte Formmerkmal (11, 11') zusätzlich eine radial nach außen in die Nut der Öffnung ragende Erhöhung aufweist.

## Claims

1. A system (1) comprising a sensor (2) for detecting a physical variable dependent on an alignment of the sensor (2) about an axis (A) of the sensor (2),
the sensor (2) having a sensor body (6) with a predetermined first form feature (7) that is arranged on an outer face of the sensor body (6) and designed to allow a predetermined alignment of the sensor (2) about the axis (A), and having a fastening device (3) for the sensor (2), this fastening device (3) having:
a receiving body (9) with a receiving device (10) that is designed to receive the sensor body, and
a second form feature (8) that is complementary to the first form feature (7) and arranged on the receiving body (9),
the first form feature (7) having a raised portion on the outer face of the sensor body (6), and
the sensor body (6) having a substantially circular cylindrical form,
the alignment of the sensor (2) being a predetermined orientation about a longitudinal axis of the substantially circular cylindrical form, and
the raised portion being arranged at a predetermined point on the circumference of the sensor housing (6), I
the system (1) having a fastening means (4) with a third form feature (11) that is complementary to the first form feature (7) and to the second form feature (8),
the receiving device (10) having an elongated opening with a substantially circular cross section,
the second form feature (8) having a groove along a longitudinal direction of the opening, and
the fastening means (4) having a clamping sleeve that is designed to be received in the opening and to be clamped in it radially between the opening and the sensor body (6), the clamping sleeve being provided with the third form feature (11) on its circumference, and
the third form feature (11) taking the form of an axial slit on the circumference of the clamping sleeve, the sides of these longitudinal slit forming two end portions (12, 13) that are spaced apart, and
the two end portions (12, 13) being bent radially outwards, and the groove and the clamping sleeve being designed such that the two end portions (12, 13) project into the groove, and
the raised portion of the sensor body (6) of the sensor (2) being arranged between the two end portions (12, 13) that project radially outwards into the groove,

2. A system (1) according to claim 1,
the physical variable being a magnetic pulse, and
the sensor (2) taking the form of an active speed sensor that detects the magnetic pulse.

3. A system (1) according to claim 1 or 2,
the first form feature (7) having a recessed portion on the outer face of the sensor body (6).

4. A system (1) according to any one of the preceding claims,
the raised portion being a distance D in the axial direction from an adjoining end of the sensory body (6).

5. A system (1) according to any one of the preceding claims,
the raised portion forming a rib that runs parallel to the longitudinal axis.

6. A system (1) according to any one of the preceding claims,
the third form feature (11, 11') additionally having a raised portion that projects radially outwards into the groove of the opening,

## Revendications

1. Système (1) composé d'un capteur (2) de détection d'une grandeur physique en fonction d'une orientation du capteur (2) autour d'un axe (A) du capteur (2), dans lequel
le capteur (2) a un corps (6) de capteur ayant une première caractéristique (7) de forme déterminée à l'avance sur une face extérieure du corps (6) du capteur, qui est constituée pour rendre possible une orientation définie à l'avance du capteur (2) autour de l'axe (A), et d'un dispositif (3) de fixation du capteur (2), dans lequel le dispositif (3) de fixation a
un corps (9) de réception ayant un dispositif (10) de réception, qui est constitué pour recevoir le corps (6) du capteur, et
une deuxième caractéristique (8) de forme sur le corps (9) de réception complémentaire avec la première caractéristique (7) de forme,
dans lequel la première caractéristique (7) de forme a une élévation sur la face extérieure du corps (6) du capteur, et
le corps (6) du capteur a une forme sensiblement cylindrique de section circulaire, et
l'orientation du capteur (2) est une orientation définie à l'avance autour d'un axe longitudinal de la forme cylindrique de section sensiblement circulaire, et
l'élévation est disposée en un point défini à l'avance sur le pourtour du corps (6) du capteur,
dans lequel le système (1) a un moyen (4) de fixation ayant une troisième caractéristique (11) de forme complémentaire de la première caractéristique (7) de forme et de la deuxième caractéristique (8) de forme, dans lequel
le dispositif (10) de réception a une ouverture s'étendant en longueur de section transversale sensiblement circulaire,
la deuxième caractéristique (8) de forme a une rainure le long d'une direction longitudinale de l'ouverture, et
le moyen (4) de fixation a un manchon de serrage, qui est constitué pour être reçu dans l'ouverture et pour y être serré radialement entre, l'ouverture et le corps (6) du capteur, le manchon de serrage étant pourvu sur son pourtour de la troisième caractéristique (11) de forme, et
la troisième caractéristique (11) de forme est constituée sous la forme d'une fente axiale sur le pourtour du manchon de serrage, les côtés longitudinaux de la fente formant deux parties (12, 13) d'extrémité à distance, et
les deux parties (12, 13) d'extrémité sont courbées vers l'extérieur radialement et la rainure et le manchon de serrage sont constitués de manière à ce que les deux parties (12, 13) d'extrémité pénètrent dans la rainure, et
l'élévation du corps (6) du capteur (2) est disposée entre les parties (12, 13) d'extrémité faisant saillie radialement vers l'extérieur dans la rainure.

2. Système (1) suivant la revendication 1, dans lequel
la grandeur physique est une impulsion magnétique, et
le capteur (2) est constitué sous la forme d'un capteur actif de vitesse de rotation, qui détecte l'impulsion magnétique.

3. Système (1) suivant la revendication 1 ou 2, dans lequel
la première caractéristique (7) de forme a un creux sur la face extérieure du corps (6) du capteur.

4. Système (1) suivant l'une des revendications précédentes, dans lequel
l'élévation a, dans la direction axiale, une distance (D) à une extrémité voisine du corps (6) du capteur.

5. Système (1) suivant l'une des revendications précédentes, dans lequel
l'élévation forme une nervure s'étendant parallèlement à l'axe longitudinal.

6. Système (1) suivant l'une des revendications précédentes, dans lequel
la troisième caractéristique (11, 11') de forme a en outre une élévation faisant saillie radialement vers l'extérieur dans la rainure de l'ouverture.
